Europäisches Patentamt

**European Patent Office**

**Office européen des brevets**

(19)

(11) Numéro de publication: **0 122 198**
**B1**

(12) ## FASCICULE DE BREVET EUROPEEN

(45) Date de publication du fascicule du brevet:
**19.11.87**

(51) Int. Cl.⁴: **B 43 K 21/02,** G 01 D 15/16

(21) Numéro de dépôt: **84400678.3**

(22) Date de dépôt: **06.04.84**

(54) **Porte-mine pour machine à dessiner.**

(30) Priorité: **08.04.83 FR 8305776**

(43) Date de publication de la demande:
**17.10.84 Bulletin 84/42**

(45) Mention de la délivrance du brevet:
**19.11.87 Bulletin 87/47**

(84) Etats contractants désignés:
**CH DE GB IT LI NL SE**

(56) Documents cités:
**DE - A - 3 229 498**
**FR - A - 633 797**
**NL - A - 260 784**
**US - A - 2 293 343**
**US - A - 3 864 046**
**US - A - 3 971 036**

(73) Titulaire: **BENSON Société anonyme dite:, Z.I. des petites haies 1, rue Jean Lemoine, F-94015 Creteil (FR)**

(72) Inventeur: **Roche, Michel, 34 Route Cossée, F-77181 Courtry (FR)**

(74) Mandataire: **Chareyron, Lucien et al, Schlumberger Limited Service Brevets c/o Giers 12, place des Etats Unis B.P. 121, F-92124 Montrouge Cédex (FR)**

ACTORUM AG

# Description

La présente invention concerne un porte-mine pour machine à dessiner, et plus particulièrement un porte-mine du type comportant un tube de guidage ou canon offrant un passage pour une mine de crayon et des moyens destinés, en mode impression, à exercer sur une mine engagée dans le canon une force sensiblement constante afin de maintenir le contact entre cette mine et un support d'impression situé du côté de l'orifice de sortie du canon.

L'utilisation de mines dans les machines à dessiner automatiques offre plusieurs avantages. Elles autorisent une très grande vitesse de dessin, ont une très grande autonomie et le temps de séchage du tracé étant nul, le document imprimé peut être bobiné immédiatement.

On connaît certes des porte-mine manuels permettant une alimentation quasi-continue de la pointe grâce à un réservoir de mines. Toutefois, l'avance de la mine au fur et à mesure de son usure doit être commandée manuellement, ce qui exclut l'utilisation de ces porte-mine pour des machines à dessiner automatiques.

Un porte-mine du type cité plus haut, destiné à une machine à dessiner et muni de moyens d'avance automatique de la mine est décrit dans le brevet US-3 971 036. Plusieurs mines sont rangées dans un magasin en forme de barillet. Une mine est amenée en position de travail par rotation du magasin et, en mode impression, cette mine est appuyée en permanence contre le support d'impression grâce à un poussoir agissant sur l'extrémité arrière de la mine. L'avance continue de la mine en fonction de son usure est bien effectuée mais, par contre, la continuité du graphisme n'est pas assurée au passage d'une mine à l'autre.

Cette continuité du graphisme n'est d'ailleurs pas plus possible avec les porte-mine manuels puisque le passage d'une mine à l'autre ne peut se faire que par un actionnement du mécanisme d'avance alors que le porte-mine est relevé.

Du brevet français FR-A- 633 797 (Feldman) on connaît notamment un porte-mine manuel dans lequel l'entraînement de la mine est réalisé par des galets venant en appui tangentiel sur la mine. Même en supposant que ce porte-mine soit installé sur une machine à dessiner, un tel entraînement latéral ne permettrait pas le passage continu d'une mine à une autre sans interruption du graphisme car il avance la mine par tronçon et de façon discontinue.

La présente invention a pour but de fournir un porte-mine pour machine à dessiner dans lequel aucune interruption de graphisme ne se produit au passage d'une mine à l'autre.

Ce but est atteint au moyen d'un porte-mine selon la revendication 1.

Ce porte-mine comprend en outre des moyens exerçant sur le canon une force destinée à appliquer l'extrémité frontale du canon en permanence contre le support d'impression. Grâce à la combinaison du dispositif d'alimentation continue et de l'application de l'extrémité frontale du canon contre le support d'impression, le passage d'une mine à l'autre se produit instantanément puisque la première mine est utilisée jusqu'au bout sans bris ou chute du tronçon restant.

Le dispositif d'avance est par exemple formé par une paire de galets entraînés par un moteur à couple constant. Avantageusement, le canon est mobile longitudinalement par rapport au corps et des moyens sont interposés entre le corps et le canon pour exercer en permanence sur ce dernier une force tendant à appliquer son extrémité frontale contre le support d'impression.

D'autres particularités et avantages du porte-mine conforme à l'invention ressortiront à la lecture de la description faite ci-après, à titre indicatif mais non limitatif, en référence aux dessins annexés sur lesquels:

– la figure 1 est une vue en coupe d'un mode de réalisation d'un porte-mine conforme à l'invention, et
– la figure 2 est une vue partielle en coupe suivant la ligne II-II de la figure 1.

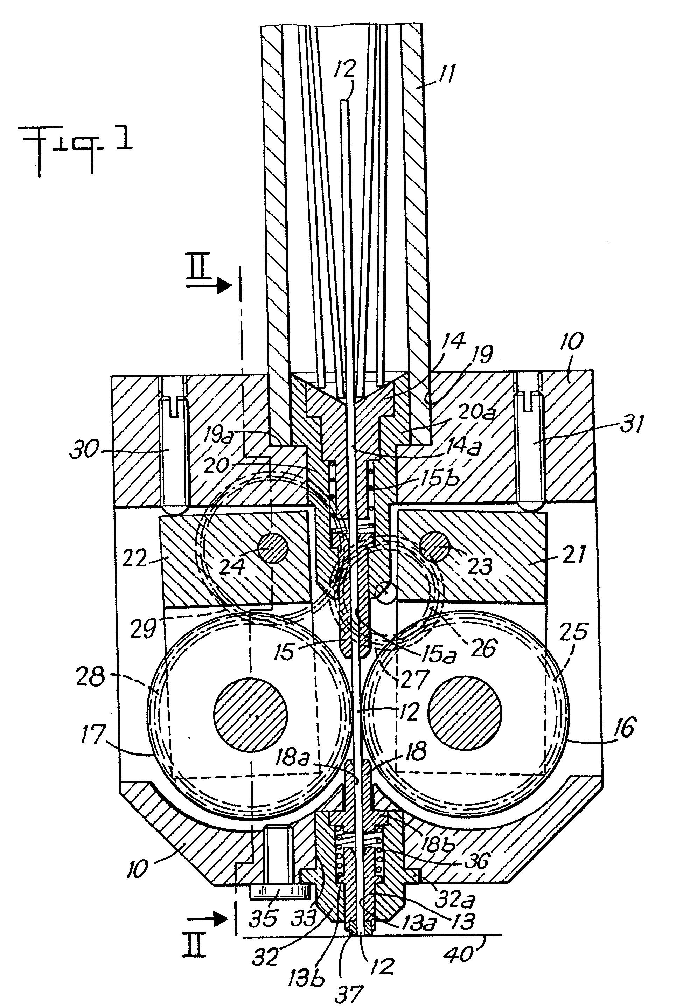

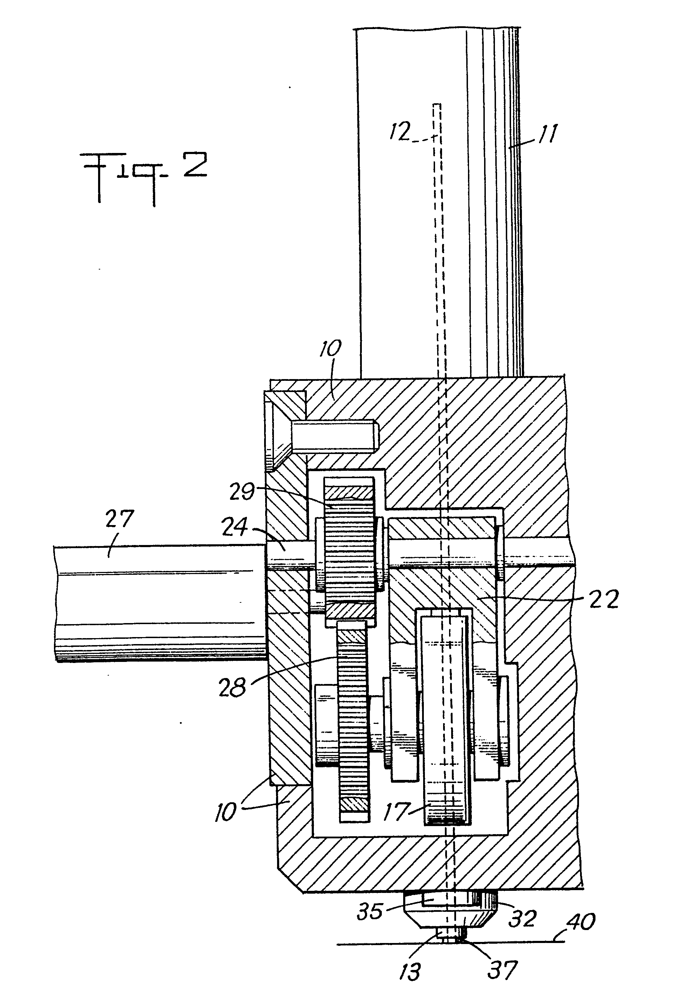

Le porte-mine illustré par les figures 1 et 2 comprend un corps 10 qui porte à sa partie supérieure un réservoir 11 de mines 12 et, à sa partie inférieure, un canon 13 et qui présente un passage vertical permettant de faire communiquer le réservoir 11 avec l'entrée du canon 13. Le long de ce passage, entre le réservoir 11 et le canon 13, on trouve successivement une trémie 14, un premier tube de guidage 15, les parties en regard de deux galets de friction 16, 17 et un second tube de guidage 18.

La trémie 14 et le tube 15 sont montés dans un manchon 20 inséré dans le passage formé dans le corps 10. Ce passage s'ouvre supérieurement par une partie 19 de diamètre plus grand raccordée par un gradin 19a au reste du passage. La partie supérieure du manchon 20 présente un épaulement 20a qui repose sur le gradin 19a et délimite, avec la paroi interne de la partie supérieure 19 du passage formé dans le corps 10, un logement annulaire pour la base du réservoir 11 de mines. Le manchon 20 présente intérieurement plusieurs parties de diamètres différents formant des gradins sur lesquels s'appuient les parties supérieures en forme de têtes de la trémie 14 et du tube 15. La trémie 14 est emmanchée à force dans le manchon 20, lui-même immobilisé dans le passage vertical du corps 10. La face supérieure conique de la trémie 14 forme un entonnoir dans le fond duquel s'ouvre un perçage vertical 14a de diamètre sensiblement égal à celui d'une mine 12. Ce perçage s'ouvre inférieurement en face du passage central 15a de même diamètre du tube 15. Ce dernier est logé avec un très léger jeu dans le manchon 20 et est maintenu en position basse au moyen d'un ressort 15b interposé entre la trémie 14 et la tête du tube de guidage 15.

Le tube 15 débouche inférieurement dans l'intervalle entre les galets 16 et 17. Ceux-ci sont montés dans des chapes respectives 21, 22 qui sont montées dans le corps 10 autour d'axes d'articulation horizontaux 23, 24. Le galet 16 est solidaire en rotation d'un pignon 25 qui engrène avec un pignon 26 monté sur l'arbre de sortie d'un moteur 27 à couple constant. Le galet 17 est solidaire en rotation d'un autre pignon 28 qui est entraîné par le pignon 26 avec interposition d'un pignon supplémentaire 29 de manière que les galets 16, 17 tournent en sens inverses avec une même vitesse linéaire. Le pignon supplémentaire 29 est monté libre en rotation sur l'axe d'articulation 24 de la chape 22. La position des chapes 21, 22 autour de leur axe d'articulation peut être réglée au moyen de vis 30, 31 vissées dans le corps 10 et dont les extrémité inférieures viennent en butée contre les faces supérieures des chapes 21, 22 au voisinage du bord extérieur de celles-ci. Par action sur les vis 30 et 31, il est possible de déplacer les chapes autour de leurs axes d'articulation afin de positionner les galets 16 et 17 de manière que l'intervalle les séparant soit dans l'alignement du perçage 14a et du passage 15a. Toujours par action sur les vis 30 et 31, il est possible de régler l'écartement entre les galets 16 et 17 et, par làmême, la pression exercée par les galets sur une mine 12 passant entre eux. Les galets 16, 17 peuvent être réalisés en une matière telle que du polyuréthane par exemple.

Le tube 18 dont l'extrémité supérieure s'ouvre dans l'intervalle entre les galets 16 et 17, présente une collerette 18b par laquelle il est immobilisé entre une bague 32 et le fond d'un logement 33. Ce dernier constitue l'extrémité inférieure du passage vertical formé dans le corps 10. La bague 32 est insérée dans le logement 33 et présente elle aussi une collerette 32a contre laquelle s'appuient les têtes de vis 35 servant au maintien de la bague 32 dans le logement 33.

Le canon 13 est monté dans la bague 32 sur le fond de laquelle il est en appui par une collerette 13b. La partie inférieure du canon 13 fait saillie hors de la bague 32, le canon 13 étant rappelé vers le bas en permanence au moyen d'un ressort 36 interposé entre le tube de guidage 18 et la collerette 13b. Une pierre 37 résistante à l'usure, par exemple un saphir, est encastrée à l'extrémité inférieure du canon 13. Un passage 13a traverse verticalement le canon 13 et la pierre 37. Le passage 13a est aligné avec le passage 18a du tube 18 et avec les passages 14a et 15a, tous ces passages ayant un même diamètre correspondant à celui des mines 12. On notera que les extrémités supérieures des passages 15a, 18a et 13a sont légèrement évasées pour faciliter l'introduction des mines.

Le fonctionnement du porte-mine décrit ci-avant est le suivant.

Normalement, une mine 12 ou plusieurs mines placées bout à bout occupent le passage vertical entre le réservoir 11 et la sortie du canon 13. En mode impression, le canon 13 est appliqué contre le support d'impression 40, par exemple une feuille de papier et l'impression est réalisée par l'extrémité avant de la mine engagée dans le canon. La pression nécessaire à l'impression et l'avance de cette mine au fur et à mesure de son usure sont produites par les galets 16, 17 qui, mûs par le moteur 27 à couple constant, transmettent une force constante à cette mine soit directement soit par l'intermédiaire d'une mine suivante. Une alimentation continue en mines est réalisée du fait que les mines 12 contenues dans le réservoir parviennent l'une après l'autre par gravité dans le passage 14a de la trémie 14 et, de là, à travers le passage 15a jusqu'au contact avec les galets 16, 17. Lorsque l'extrémité postérieure d'une mine 12 a pénétré dans le passage 14a, l'extrémité antérieure d'une autre mine 12, guidée par la trémie 14, vient s'engager dans le passage 14a à la suite de la mine précédente, assurant une continuité de mise dans le passage 14a puis les passages 15a, 18a, 13a. Ainsi, une usure totale de chaque mine avant le début de l'utilisation de la mine suivante est rendue possible sans interruption du graphisme.

Le relevage de la mine 12 en fin de mode impression est réalisé en appliquant au moteur 27 une impulsion de sens opposé au signal appliqué en mode impression. Le moteur tourne alors brièvement en sens inverse en relevant la mine prise entre les galets 16, 17. Il est possible que cette mine soit différente du tronçon présent au niveau de la sortie du canon 13; ce tronçon «flotte» alors à la surface du support d'impression 40 mais, du fait de sa très faible masse n'impressionne pas le support. On notera par ailleurs que le montage du tube de guidage 15 lui permet de coulisser vers le haut verticalement par rapport au manchon 14, à l'encontre du ressort 15b. Ce dernier exerce une force de rappel juste suffisante pour maintenir le tube 15 en position basse en mode impression mais insuffisante pour s'opposer à tout mouvement du tube 15 lors du relevage, tout risque de cassure de la mine au niveau de l'orifice de sortie du tube 15 est éliminé, cassure qui pourrait sinon être produite par les efforts résultant par exemple d'un léger défaut d'alignement alliée à l'inversion brusque du sens d'entraînement.

Bien entendu, diverses modifications et adjonctions pourront être apportées au mode de réalisation décrit plus haut d'un porte-mine conforme à l'invention sans pour cela sortir du cadre de protection défini par les revendications annexées.

En particulier, afin d'éviter une diminution du frottement entre les galets d'entraînement et les mines par suite de maculage des galets par le graphite des mines, ces dernières peuvent être enrobées d'une pellicule protectrice, par exemple une pellicule de vernis.

### Revendications

1. Porte-mine pour machine à dessiner, comportant un corps (10) ayant un tube de guidage ou canon (13) offrant un passage pour une mine de crayon et des moyens destinés, en mode impression, à exercer sur une mine (12) engagée dans le canon (13) une force sensiblement constante afin de maintenir le contact entre cette mine et un support d'impression situé du côté de l'extrémité frontale du canon, porte-mine caractérisé en ce qu'il comporte en outre:

– un dispositif d'alimentation continue comprenant un réservoir de mines (11) qui communique avec le canon (13) pour alimenter celui-ci en mines sans interruption; et
– un dispositif d'avance (16, 17) adapté à venir en prise avec la paroi latérale de la mine engagée dans le canon ou d'une autre mine qui la suit pour exercer ladite force sensiblement constante sur ladite mine engagée dans le canon de façon que le passage d'une mine à l'autre s'opère sans discontinuité du graphisme.

2. Porte-mine selon la revendication 1, caractérisé en ce qu'il comprend de plus des moyens (36) exerçant sur le canon une force destinée à appliquer l'extrémité frontale du canon en permanence contre le support d'impression (40).

3. Porte-mine selon la revendication 1 ou 2, caractérisé en ce que le dispositif d'avance comprend deux galets d'entraînement (16,17) par friction, mûs par un moteur à couple constant (27).

4. Porte-mine selon la revendication 3, caractérisé en ce que le canon (13) est mobile longitudinalement par rapport au corps (10) et des moyens (36) sont interposés entre le corps et le canon pour exercer en permanence sur ce dernier une force tendant à l'appliquer contre le support d'impression.

5. Porte-mine selon la revendication 3 ou 4, caractérisé en ce que des chapes (21, 22) portant chacune un galet d'entraînement (16, 17) sont montées dans le corps (10) de sorte que les galets viennent en prise avec une mine (12) sur le trajet de celle-ci entre le réservoir de mines (11) et le canon (13).

6. Porte-mine selon la revendication 5, caractérisé en ce que les chapes (21, 22) sont articulées sur le corps (10) et ont une position ajustable afin de régler l'écartement entre les galets (16, 17).

7. Porte-mine selon l'une quelconque des revendications 3 à 6, caractérisé en ce que la mine (12) en cours d'utilisation est relevable en fin de mode impression par application au moteur (27) d'une impulsion destinée à la faire tourner en sens inverse de celui correspondant au mode impression.

8. Porte-mine selon la revendication 7, caractérisé en ce que sur son trajet entre le réservoir (11) et les galets (16, 17) chaque mine (12) passe dans un tube de guidage (15) mobile longitudinalement en direction du réservoir à l'encontre d'un ressort de rappel (15b).

9. Porte-mine selon l'une quelconque des revendications 1 à 8, caractérisé en ce que les mines (12) sont enrobées d'une pellicule destinée à éviter le maculage du dispositif d'avance en contact avec les mines.

**Patentansprüche**

1. Minenträger für Zeichenmaschine, umfassend einen Korpus (10) mit einem Führungsrohr oder -lauf (13), das einen Durchlass für eine Bleistiftmine sowie Mittel aufweist, die dazu bestimmt sind, im Zeichenmodus auf eine in dem Lauf (13) sitzende Mine (12) eine im wesentlichen konstante Kraft auszuüben, um zwischen dieser Mine und einer auf der frontalen Endseite des Laufs angeordneten Zeichenunterlage den Kontakt aufrechtzuerhalten, welcher Minenhalter dadurch gekennzeichnet ist, dass er ferner umfasst:

– eine Anordnung für kontinuierliche Zufuhr, umfassend ein Minenreservoir (11), das mit dem Lauf (13) in Verbindung steht zum unterbrechungslosen Zuführen von Minen zu diesem, und
– eine Vorschubanordnung (16, 17), ausgebildet zum Erfassen der Seitenwandung der im Lauf sitzenden oder einer anderen, ihr folgenden Mine, um auf die im Lauf sitzende Mine die genannte, im wesentlichen konstante Kraft derart auszuüben, dass der Durchtritt einer Mine nach der andern ohne Diskontinuität des Strichverlaufs erfolgt.

2. Minenträger nach Anspruch 1, dadurch gekennzeichnet, dass er zusätzlich Mittel (36) umfasst, die auf den Lauf eine Kraft ausüben, dazu bestimmt, das frontale Ende des Laufs permanent an die Zeichenunterlage (40) in Anlage anzudrücken.

3. Minenträger nach Anspruch 1 oder 2, dadurch gekennzeichnet, dass die Vorschubanordnung zwei, von einem Motor mit konstantem Drehmoment angetriebene reibungsschlüssige Antriebsrollen (16, 17) umfasst.

4. Minenträger nach Anspruch 3, dadurch gekennzeichnet, dass der Lauf (13) bezüglich des Korpus' (10) längsbeweglich ist und Mittel (36) zwischen dem Korpus und dem Lauf angeordnet sind zum ständigen Ausüben einer Kraft auf den letzteren mit der Tendenz, ihn gegen die Zeichenunterlage zu drücken.

5. Minenträger nach Anspruch 3 oder 4, dadurch gekennzeichnet, dass jeweils eine Antriebsrolle (16, 17) tragende Bügel (21, 22) in dem Korpus (10) derart montiert sind, dass die Rollen in Eingriff mit einer Mine (12) auf deren Weg zwischen dem Minenreservoir (11) und dem Lauf (13) gelangen.

6. Minenträger nach Anspruch 5, dadurch gekennzeichnet, dass die Bügel (21, 22) auf dem Korpus schwenkbeweglich gelagert sind und eine einstellbare Position haben, um den Abstand zwischen den Rollen (16, 17) zu regulieren.

7. Minenträger nach einem der Ansprüche 3 bis 6, dadurch gekennzeichnet, dass die gerade benutzte Mine am Ende des Zeichenmodus zurückhebbar ist durch Anlegen eines Impulses an den Motor (27), dazu bestimmt, diesen in Gegenrichtung bezüglich des Drehsinns im Zeichenmodus drehen zu lassen.

8. Minenträger nach Anspruch 7, dadurch gekennzeichnet, dass jede Mine (12) auf ihrem Weg zwischen dem Minenreservoir (11) und den Rollen (16, 17) eine Führungsröhre (15) durchläuft, die gegen die Vorspannung einer Rückstellfeder (15b) in Richtung des Reservoirs längsbeweglich ist.

9. Minenträger nach einem der Ansprüche 1 bis 8, dadurch gekennzeichnet, dass die Minen (12) mit einem Überzug versehen sind, dazu bestimmt, das Verschmutzen der Vorschubanordnung in Kontakt mit den Minen zu vermeiden.

**Claims**

1. A Pencil device for use with a plotting machine, comprising a housing (10) with a guide tube or barrel (13) providing a passage for a pencil lead and means intended during a writing operation, to exert on a lead (12) positioned in the barrel (13) a substantially constant force in order to press such lead against a recording medium located on the front end side of the barrel, which pencil device is further characterized in that it comprises:

– continuous feeding means including a lead magazine (11) communicating with the barrel (13) for continuously feeding the same with leads; and

– forwarding means (16, 17) adapted to engage the side wall of the lead positioned in the barrel or of another following lead in order to exert said substantially constant force upon said lead positioned in the barrel so that the transition from one lead to the other occurs without writing discontinuity.

2. The Pencil device according to claim 1 characterized in that it moreover comprises means (36) which exert on the barrel a force intended to permanently urge the forward end of the barrel against the recording medium (40).

3. The pencil device according to claim 1 or 2 characterized in that the forwarding means comprises two friction drive rollers (16, 17) rotatably driven by a constant torque motor (27).

4. The pencil device according to claim 3 characterized in that the barrel (13) is movable longitudinally relative to the housing (10) and means (36) are interposed between the housing and the barrel to continuously exert on the latter a force which tends to urge it against the recording medium.

5. The pencil device according to claim 3 or 4, characterized in that blocks (21, 22) each supporting a drive roller (16, 17) are mounted within the housing (10) so that the rollers engage a lead (12) along its trajectory between the lead magazine (11) and the barrel (13).

6. The pencil device according to claim 5, characterized in that the blocks (21, 22) are pivotably mounted on the housing (10) and are adjustable in their position so that the distance between the rollers (16, 17) may be regulated.

7. The pencil device according to any of claims 3 to 6, characterized in that the lead (12) currently used may be lifted up at the end of the writing operation mode by feeding the motor (27) with a pulse for causing such lead to rotate in a direction opposite to the one corresponding to the writing operation mode.

8. The pencil device according to claim 7, characterized in that, along its trajectory between the magazine (11) and the rollers (16, 17), each lead (12) passes within a guide tube (15) which is longitudinally movable towards the magazine against the biassing of a bias spring (15b).

9. The pencil device according to any of claims 1 to 8, characterized in that the leads (12) are coated with a film intended to avoid any blotting of the forwarding means in contact with the leads.

Fig. 1

0 122 198

0 122 198

Fig. 2